Europäisches Patentamt

European Patent Office

Office européen des brevets

(19)

(11) **EP 1 236 920 A1**

(12) **EUROPEAN PATENT APPLICATION**

(43) Date of publication:
**04.09.2002 Bulletin 2002/36**

(51) Int Cl.⁷: **F16D 43/21**, F16D 7/06

(21) Application number: **02251464.0**

(22) Date of filing: **01.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Harvey, John Herbert**<br>**Perton, Wolverhampton WV6 7SJ (GB)** |
| (30) Priority: **02.03.2001 GB 0105189** | (74) Representative: **Pople, Joanne Selina**<br>**Marks & Clerk,**<br>**Alpha Tower,**<br>**Suffolk Street,**<br>**Queensway**<br>**Birmingham B1 1TT (GB)** |
| (71) Applicant: **Lucas Industries Limited**<br>**West Midlands B90 4LA (GB)** | |

(54) **Torque limiter**

(57)    A torque limiting device (10) for limiting torque applied to a shaft comprises an input shaft (12), an output shaft (14), and a clutch arrangement having input (22) and output (26) clutch elements coupled to the input and output shafts respectively. One of the clutch elements (26) is axially moveable with respect to the other clutch element (22) in response to a torque being applied to the output shaft (14) which is in excess of a predetermined torque limit. An indicator means (52, 70, 72) is arranged to provide an indication that the torque applied to the output shaft (14) exceeds the predetermined torque limit and to provide a further indication of the direction of rotation of the input shaft (12) when the predetermined torque limit is exceeded.

FIG 1

## Description

This invention relates to a torque limiting device for limiting torque applied to a shaft. In particular, the invention relates to a torque limiting device including indicator means for providing an indication that a torque limitation has occurred.

Torque limiting devices are known that limit the transmission of the torque applied by shafts to actuators for aircraft control surfaces. Such devices normally include a ball clutch having input and output shafts, in which relative movement between input and output clutch members occurs when a predetermined level of torque is exceeded, resulting in application of a brake to arrest rotation of the output shaft. If the torque subsequently falls below the predetermined torque limit the brake is released and transmission is resumed.

Application of the brake in the torque limiting device may indicate a malfunction of the actuator system. An indicator device may therefore be provided to give an indication that such braking has occurred and, hence, that a malfunction has occurred.

It is an object of the present invention to provide an improved torque limiting device of the aforementioned type.

According to the present invention there is provided a torque limiting device comprising an input shaft and an output shaft and a clutch arrangement having input and output clutch elements coupled to the input and output shafts respectively, one of the clutch elements being axially moveable with respect to the other clutch element in response to a torque being applied to the output shaft which is in excess of a predetermined torque limit, and indicator means arranged to provide an indication that the torque applied to the output shaft exceeds the predetermined torque limit and to provide a further indication of the direction of rotation of the input shaft when the predetermined torque limit is exceeded.

Aircraft control surfaces may be actuated to move in one of two directions, depending upon the direction of rotation of the input and output shafts. An advantage of the present invention is that, not only will the indicator means show that the predetermined torque limit has been exceeded, but will also show in which direction the input shaft was rotating when this occurred, thereby assisting operating and/or maintenance personnel in diagnosing and rectifying a malfunction.

Preferably, the torque limiting device includes an indicator member which is angularly moveable in a first direction in response to movement of said axially moveable one of said clutch elements when the input shaft is rotating in a first rotation direction, and which is angularly moveable in a second direction in response to movement of said axially moveable one of said clutch elements when the input shaft is rotating in a second rotation direction.

The torque limiting device may also include an indicator output arrangement which is cooperable with the indicator member to provide an indication of the direction of rotation of the input shaft when the torque exceeds the predetermined torque limit.

In a preferred embodiment, the torque limiting device includes an abutment member which is axially moveable in response to movement of said axially moveable one of said clutch elements, the abutment member cooperating with the indicator member to impart angular movement thereto upon axial movement of the abutment member.

In a preferred embodiment, the torque limiting device further comprises a plurality of brake elements arranged to arrest rotation of the output shaft in response to relative axial movement between the input and output clutch elements beyond a predetermined amount.

The torque limiting device may also include first resilient bias means for biasing the input and output clutch elements against relative axial movement. The first resilient bias means typically take the form of a first set of disc springs.

Preferably, the torque limiting device includes second resilient bias means, typically in the form of a second set of disc springs, arranged to bias the abutment member towards the clutch elements.

The indicator member preferably takes the form of a disc-shaped member. Spring means may also be provided to bias the disc-shaped member towards the abutment member, and stop means may be provided for preventing contact between the disc-shaped member and the abutment member in the absence of a torque in excess of the predetermined torque limit being applied to the output shaft. The disc-shaped member is conveniently arranged to move axially away from the stop means and to move angularly upon engagement with the abutment member when the torque exceeds the predetermined torque limit. Preferably, the abutment member has a surface for engaging the disc-shaped member, the abutment member and the surface having a relatively high coefficient of friction therebetween, thereby to ensure the disc-shaped member is caused to move angularly upon engagement with the abutment member.

Preferably, a spring abutment member interposes the spring means and the disc-shaped member, resistance to angular movement of the disc-shaped member relative to the spring abutment member being limited by a relatively low coefficient of friction therebetween.

Conveniently, the indicator output arrangement comprises first and second plungers which are cooperable with the disc-shaped member and which are engaged within a housing, the first plunger member being urged outwardly from the housing upon angular movement of the disc-shaped member in the first direction, thereby to provide an indication that the input shaft was rotating in the first rotation direction when the predetermined torque limit is exceeded, and the second plunger member being urged outwardly from the housing upon angular movement of the disc-shaped member in the second direction, thereby to provide an indication that the input shaft was rotating in the second rotation direction when the predetermined torque limit is exceeded.

Preferably, the indicator output arrangement comprises means for retaining whichever of the plungers is urged outwardly into an outward position. For example the retaining means may comprise a further spring captured between the plunger and the housing, which spring contracts to engage in an associated groove provided in the plunger to retain the plunger in its outward position when urged thereto.

The invention will now be described, by way of example only, with reference to the accompanying drawings in which:

Figure 1 shows a sectional view of a torque limiting device in accordance with an embodiment of the present invention,

Figure 2 is a sectional view of part of the torque limiting device in Figure 1,

Figure 3 is an enlarged view of part of the torque limiting device of Figure 1, and

Figure 4 shows a spring component for use in the torque limiting device of Figure 1.

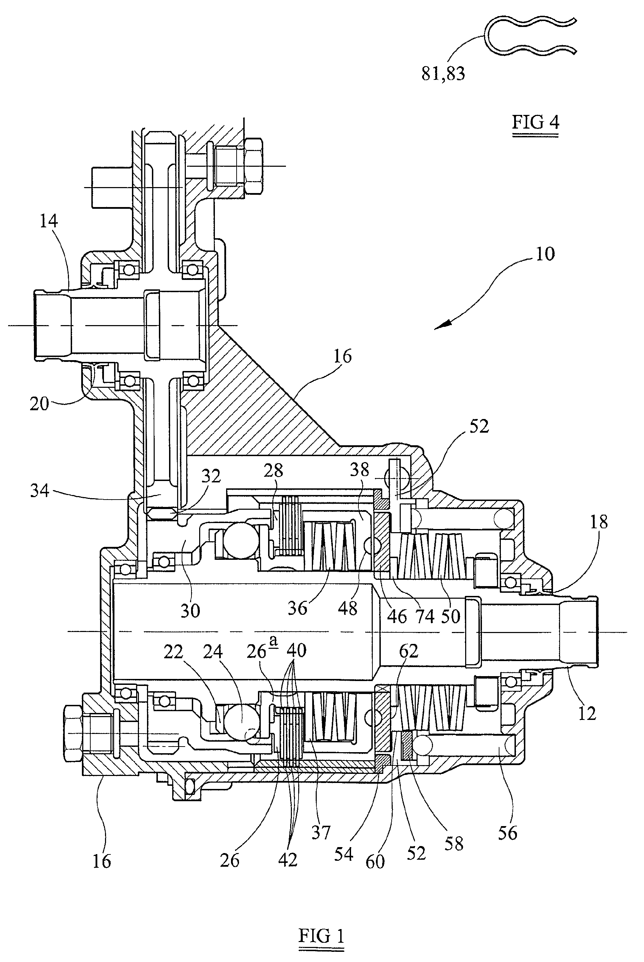

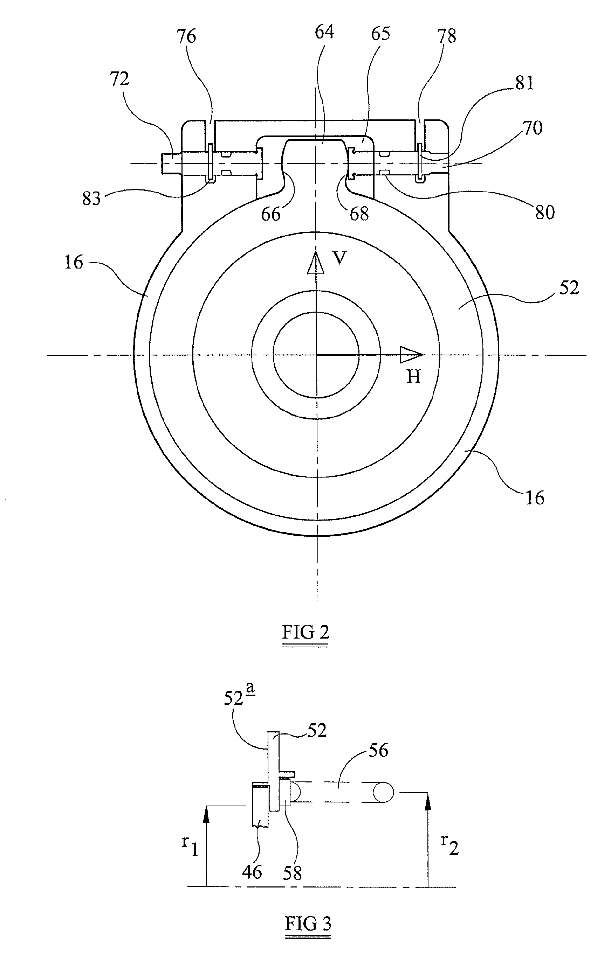

Referring to Figure 1, a torque limiting device, shown generally as 10, comprises an input shaft 12 and an output shaft 14 of an actuator system for an aircraft control surface or surfaces. The torque limiting device 10 has a housing 16 provided with input and output openings through which the input and output shafts 12,14 respectively protrude. Annular seals 18, 20 are arranged within the first and second openings to seal against the input and output shafts, 12, 14 respectively.

The input shaft 12 carries an annular input clutch element 22 and a flanged, annular output clutch element 26. A face of the input clutch element 22 is directed towards an opposed face of the flanged portion of the output clutch element 26, each of the opposed facing surfaces being provided with a plurality of aligned and circumferentially spaced recesses, each for receiving a spherical member 24. The output clutch element 26 is provided with a dog 28 which engages an output drive wheel 30 provided with a plurality of gear teeth 32. The gear teeth 32 on the output drive wheel 30 engage corresponding teeth on an output gear wheel 34 such that rotational drive of the input shaft 12 is transmitted to the output shaft 14 through the clutch and gear assembly.

The output clutch element 26 is biased towards the input clutch element 22 by means of first resilient bias means 36, in the form of a set of first annular disc springs. A load is transmitted from the first disc springs 36 to the output clutch element 26 through a spacer member 37, an end one of the first disc springs 36 remote from the spacer member 37 being in engagement with a first, annular abutment member 38. The output clutch element 26 includes an axially extending region 26a which carries a plurality of first brake elements or discs 40. The brake elements 40 are in splined engagement with the output clutch element 26 such that a limited amount of relative axial movement between the brake elements 40 and the output clutch member 26 is permitted, but relative angular movement therebetween is substantially prevented.

A second plurality of brake discs or elements 42 are intercalated with the first brake discs 40. The second brake discs 42 are arranged such that a limited amount of relative axial movement between the second brake discs 42 and the housing 16 is permitted, but such that angular movement of the second brake discs 42 is substantially prevented.

A second, annular abutment member 46 is axially moveable, and in rotational engagement, with the input shaft 12. The second abutment member 46 is arranged such that a surface thereof faces an opposing further surface of the first abutment member 38. Annular recessed grooves are provided in the opposing surfaces of the first and second abutment members 38, 46 for receiving a plurality of balls so as to form a ball-race 48 which permits the first and second abutment members 38, 46 to rotate with respect to one another whilst axial movement is transmitted from one to the other.

The second abutment member 46 is biased towards the first abutment member 38 by means of second resilient bias means 50 in the form of a plurality of second, double disc springs mounted around the input shaft 12 for rotation therewith, the double disc springs 50 being of greater stiffness than the first disc springs 36. The biasing force of the double disc springs 50 is transmitted through the abutment member 46 and the ball-race 48 so that first abutment member 38 is biased towards the input and output clutch elements 22, 26 and maintains a pre-loading of the first disc springs 36. Movement of the second abutment member 46 and, thus, the level of pre-loading applied to the disc springs 36 is limited by contact with a shoulder 74 on the input shaft 12.

In an alternative embodiment, the second resilient bias means 50 may take the form of coil springs, rather than disc springs.

An annular indicator element in the form of a disc-shaped member 52 (shown in more detail in Figure 3) is held between the housing 16 and a stop ring 54 by means of a biasing force provided by a spring 56. A low-friction washer 58 interposes the spring 56 and the disc-shaped member 52. The disc-shaped member 52 is located between the spring 56 and stop ring 54 such that, in normal use, a relatively small clearance 60 exists between the disc-shaped member 52 and a surface 62 of the second abutment member 46.

As can be seen most clearly in Figure 2, the disc-shaped member 52 includes a projection 64 which extends radially outward into a recess 65 provided in the housing 16. The projection 64 of the disc-shaped member 52 has laterally opposed surfaces 66, 68. First and second plungers 70, 72 are frictionally engaged within the housing 16 such that end faces of each plunger 70, 72 laterally oppose one another. Alternatively, or in addition, the plungers 70, 72 may be lightly spring biased by holding or retaining springs 81, 83 laterally engaged across the diameters of the plungers 70, 72 from the slots 76, 78. Figure 4 shows an example of such a retaining spring 81, 83.

In use, a rotational drive is provided to input shaft 12. In the absence of a torque exceeding a predetermined torque limit of the torque limiting device, the rotational drive is transmitted through the input clutch element 22, via the spherical members 24, to the output clutch element 26. The dogs 28 transmit rotational drive to the output drive wheel 30 and, via the gear teeth 32, to the output gear wheel 34 and, hence, to the output shaft 14.

In circumstances in which an excessive load is applied to the output shaft 14, for example as may be caused by a malfunction, such that the torque load on the output shaft 14 exceeds the predetermined torque limit, relative angular displacement occurs between the input and output clutch elements 22, 26. Such relative angular displacement causes the spherical members 24 to ride up the recesses provided in the input and output clutch elements 22, 26, thereby displacing the output clutch element 26 axially in a direction away from the input clutch element 22. Such axial displacement compresses the first disc springs 36 against the first abutment member 38 and causes the first and second brake discs 40, 42 to be brought into frictional engagement to apply a braking force to the output shaft 14. The braking effect further increases the relative angular displacement of the input and output clutch elements 22, 26 so that there is further axial movement of the output element 26 as the spherical members 24 continue to ride up the recesses in the clutch elements 22, 26.

Following initial axial movement of the output clutch element 26 to cause the first and second brake discs 40, 42 to be brought into engagement and compression of the first disc springs 36, further axial movement of the output clutch element 26 causes the first abutment member 38 and the second abutment member 46 to move axially (to the right, as shown in Figure 1) so as to compress the double disc springs 50. Rotational movement of first abutment member 38 is restricted by the braking effect of the first and second brake discs 40, 42, but rotational movement of the second abutment member 46 continues with the rotation of the input shaft 12. The ball race 48 permits axial movement of the first abutment member 38 to be transmitted to the second abutment member 46 even though there is a relative angular movement between the two components.

Axial movement of the second abutment member 46 causes the clearance 60 to be closed, and brings the second abutment member 46 into engagement with the disc-shaped member 52, thereby compressing the spring 56 and causing disengagement of the disc-shaped member 52 and the stop ring 54. The disc-shaped member 52 is angularly displaced by means of the frictional engagement with the rotating second abutment member 46. It will be appreciated that the disc-shaped member 52 will be angularly displaced in the same direction as the direction of rotation of the second abutment member 46 and, hence, in the same direction of rotation as the input shaft 12.

Angular displacement of the disc-shaped member 52 causes the projection 64 thereof to move towards, and into engagement with, one or the other of the plungers 70, 72, depending on the direction of said angular displacement. One or the other of the surfaces 66, 68 of the projection 64 is therefore moved into engagement with the respective one of the plungers 70, 72, so as to urge the respective plunger outwardly from the housing 16, thereby providing a visual indication that the predetermined torque limit has been exceeded. Which of the two plungers 70, 72 is urged outwardly from the housing 16 provides an indication of the direction in which the input shaft 12 is rotating when the predetermined torque limit is exceeded.

Upon braking of the output shaft 14, the torque applied to the output shaft 14 may be reduced such that relative angular movement between the input and output clutch elements 22, 26 is ceased, thereby causing the spherical members 24 to ride back into their respective recesses 24. Under such circumstances, the first abutment member 38 and the second abutment member 46 are able to move axially (to the left in Figure 1), due to the force applied by the double disc springs 50, thereby removing the braking load applied to the first and second brake discs 40,42. Normal drive transmission is therefore resumed. However, whichever of the plungers, 70 or 72, was urged outwardly from the housing 16 by the disc-shaped member 52 will remain in its outward position such that, for example, when the aircraft has landed, a visual indication is provided that the predetermined torque limit was exceeded, and in which direction the input shaft 12 was rotating when this occurred.

As shown in Figure 2, plunger 72 has been urged outwardly of the housing 16, but plunger 70 remains in its normal position. Each plunger 70, 72 has a shallow circumferential groove 80 formed part way along its length (only one of which is visible in Figure 2 on the undisplaced plunger 70). Each slot 76, 78 carries a spring 81, 83 (as shown in Figure 4). The groove is positioned so that upon outward displacement of the plunger 70, 72 the groove 80 is aligned with the respective slot 76, 78, thereby causing the respective spring to contract so as to engage in the associated groove. The plunger 72, which was urged outwardly from the housing 16 by the disc-shaped member 52, has been latched in the displaced position through cooperation between the spring 83, located in the respective slot 76, and the respective shallow groove 80. The undisplaced plunger 70 is free to move axially within the housing 16 and the spring 81 located in the slot 78 when urged to do so by the disc-shaped member 52, until such time as the plunger is displaced so that the groove 80 is aligned with the slot 78.

Referring to Figure 3, the disc-shaped member 52, when engaged by the second abutment member 46, is subjected to two frictional torques, $T_1$ and $T_2$. The torque $T_1$ is the torque associated with the second abutment member 46 which acts at an average radius $r_1$ (i. e. the radius at the centre point of the contacting surfaces) and is given by;

$$T_1 = \mu_1 \, n \, F \, r_1$$

where F is the compression force due to the spring 56 which acts on the disc-shaped member 52, *n* is a constant and $\mu_1$ is the coefficient of friction between the second abutment member 46 and a contacting surface 52a of the disc-shaped member 52 .

The torque, $T_2$, is the torque associated with the spring washer 58 which acts at an average radius $r_2$ and is given by;

$$T_2 = \mu_2 \, n \, F \, r_2$$

where $\mu_2$ is the coefficient of friction between the spring washer 58 and a second contacting surface 52b of the disc-shaped member 52. It will be appreciated that, for the device to function correctly, the spring force and the coefficients of friction $\mu_1$, $\mu_2$, must be selected such that $T_1$ is greater than $T_2$.

It will be appreciated that the torque limiting device is not limited to use in an actuator system for aircraft control surfaces, and may be used in alternative actuation systems.

**Claims**

1. A torque limiting device (10) comprising:

    an input shaft (12),
    an output shaft (14),
    a clutch arrangement having input (22) and output (26) clutch elements coupled to the input and output shafts respectively, one of the clutch elements (26) being axially moveable with respect to the other clutch element (22) in response to a torque being applied to the output shaft (14) which is in excess of a predetermined torque limit, and
indicator means (52, 70, 72) arranged to provide an indication that the torque applied to the output shaft (14) exceeds the predetermined torque limit and to provide a further indication of the direction of rotation of the input shaft (12) when the predetermined torque limit is exceeded.

2. The torque limiting device of claim 1, wherein said indicator means includes an indicator member (52) which is angularly moveable in a first direction in response to movement of said axially moveable one of said clutch elements (26) when the input shaft (12) is rotating in a first rotation direction, and which is angularly moveable in a second direction in response to movement of said axially moveable one of said clutch elements (26) when the input shaft (12) is rotating in a second rotation direction.

3. The torque limiting device of claim 2, wherein said indicator means includes an indicator output arrangement (70, 72) which is cooperable with the indicator member (52) to provide said indication of the direction of rotation of the input shaft (12) when the torque exceeds the predetermined torque limit.

4. The torque limiting device of claim 2 or claim 3, including an abutment member (38, 46) which is axially moveable in response to movement of said axially moveable one of said clutch elements (26), the abutment member (38, 46) cooperating with the indicator member (52) to impart angular movement thereto upon axial movement of the abutment member (38, 46).

5. The torque limiting device of claim 4, including first resilient bias means (36) for biasing the input and output clutch elements (22, 26) against relative axial movement.

6. The torque limiting device of claim 5, including second resilient bias means (50), arranged to bias the abutment member (38, 46) towards the clutch elements (22, 26).

7. The torque limiting device of claim 6, wherein the first (36) and/or the second (50) resilient bias means takes the form of a set of disc springs.

8. The torque limiting device of any preceding claim, further comprising a plurality of brake elements (40, 42) arranged to arrest rotation of the output shaft (14) in response to relative axial movement between the input and output clutch elements (22, 26) beyond a predetermined amount.

9. The torque limiting device of claim 4, wherein the indicator member (52) takes the form of a disc-shaped member, spring means (56) being provided to bias the disc-shaped member (52) towards the abutment member (38, 46).

10. The torque limiting device of claim 9, further including stop means (54) for preventing contact between the disc-shaped member (52) and the abutment member (46) in the absence of a torque in excess of the predetermined torque limit being applied to the output shaft (14).

11. The torque limiting device of claim 10, wherein the disc-shaped member (52) is arranged to move axially away from the stop means (54) and to move angularly upon engagement with the abutment member (46) when the torque exceeds the predetermined torque limit.

12. The torque limiting device of any one of claims 9 to 11, wherein the abutment member (46) has a surface (62) for engaging the disc-shaped member (52), the abutment member (46) and the surface (62) having a relatively high coefficient of friction therebetween, thereby to ensure the disc-shaped member (52) is caused to move angularly upon engagement with the abutment member (46).

13. The torque limiting device of claim 12, wherein a spring abutment member (58) interposes the spring means (56) and the disc-shaped member (52), and wherein the spring abutment member (58) and the disc-shaped member (52) have a relatively low coefficient of friction therebetween to limit angular movement of the disc-shaped member (52) relative to the spring abutment member (58).

14. The torque limiting device of any one of claims 9 to 13, wherein the indicator output arrangement comprises first and second plungers (70, 72) which are cooperable with the disc-shaped member (52) and which are engaged within a housing (16), the first plunger member (70) being urged outwardly from the housing (16) upon angular movement of the disc-shaped member (52) in the first direction, thereby to provide an indication that the input shaft (12) was rotating in the first rotation direction when the predetermined torque limit is exceeded, and the second plunger member (72) being urged outwardly from the housing (16) upon angular movement of the disc-shaped member (52) in the second direction, thereby to provide an indication that the input shaft (12) was rotating in the second rotation direction when the predetermined torque limit is exceeded.

15. The torque limiting device of claim 14, wherein the indicator output arrangement comprises means (76, 78, 81, 83) for retaining whichever of the plungers (70, 72) is urged outwardly into an outward position.

16. The torque limiting device of claim 15, wherein the retaining means comprises a further spring (81, 83) captured between the plunger (70, 72) and the housing (16), which spring (81, 83) contracts to retain the plunger (70, 72) in its outward position when urged thereto.

81,83

FIG 4

FIG 1

FIG 2

FIG 3

))) **European Patent**
**Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 878 635 A (BOEING CO) 18 November 1998 (1998-11-18) * column 2, line 53 - line 56 * * column 3, line 37 - line 50; figure 1A * | 1 | F16D43/21 F16D7/06 |
| A | US 3 835 967 A (KERR R) 17 September 1974 (1974-09-17) * column 2, line 23 - line 28; figure 1 * | 1 | |
| A | DATABASE WPI Section PQ, Week 198631 Derwent Publications Ltd., London, GB; Class Q63, AN 1986-203137 XP002201127 -& SU 1 200 021 A (IVANOV V V), 23 December 1985 (1985-12-23) * abstract * | 1 | |
| A | US 4 454 504 A (JOCZ ARMIN E) 12 June 1984 (1984-06-12) * column 3, line 11 - line 31 * * column 4, line 61 - column 5, line 2; figure 1 * | 1 | TECHNICAL FIELDS SEARCHED (Int.Cl.7) F16D |

The present search report has been drawn up for all claims

| Place of search | Date of completion of the search | Examiner |
|---|---|---|
| THE HAGUE | 6 June 2002 | Salé, Y |

EPO FORM 1503 03 82 (P04C01)

**ANNEX TO THE EUROPEAN SEARCH REPORT
ON EUROPEAN PATENT APPLICATION NO.**                    EP 02 25 1464

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2002

| Patent document cited in search report | | Publication date | Patent family member(s) | | Publication date |
|---|---|---|---|---|---|
| EP 0878635 | A | 18-11-1998 | US<br>CA<br>CN<br>EP | 5901817 A<br>2234004 A1<br>1197900 A<br>0878635 A1 | 11-05-1999<br>18-10-1998<br>04-11-1998<br>18-11-1998 |
| US 3835967 | A | 17-09-1974 | CA | 997289 A1 | 21-09-1976 |
| SU 1200021 | A | 23-12-1985 | SU | 1200021 A1 | 23-12-1985 |
| US 4454504 | A | 12-06-1984 | NONE | | |

EPO FORM P0459

For more details about this annex : see Official Journal of the European Patent Office, No. 12/82